# EUROPÄISCHE PATENTSCHRIFT

(11) **EP 0 966 704 B1**
(45) Veröffentlichungstag und Bekanntmachung des Hinweises auf die Patenterteilung: **21.11.2001**
(21) Anmeldenummer: 98921356.6
(22) Anmeldetag: 13.03.1998
(51) Int. Cl.: G05B 19/042

(54) **PROGRAMMIERBARE VORRICHTUNG ZUR VERTEILUNG VON ELEKTRISCHEN STEUERSIGNALEN AN TECHNISCHE GERÄTE**
PROGRAMMABLE DEVICE FOR DISTRIBUTING ELECTRICAL CONTROL SIGNALS TO TECHNICAL APPLIANCES
DISPOSITIF PROGRAMMABLE POUR REPARTIR DES SIGNAUX DE COMMANDE ELECTRIQUES SUR DES APPAREILS TECHNIQUES

(30) Priorität: 14.03.1997 DE 19710521
(43) Veröffentlichungstag der Anmeldung: 29.12.1999
(73) Patentinhaber: SIEMENS AKTIENGESELLSCHAFT, 80333 München (DE)
(72) Erfinder: MÖHLER, Harald, D-90409 Nürnberg (DE); LENZ, Christian, D-22397 Hamburg (DE)
(86) Internationale Anmeldenummer: DE9800754
(87) Internationale Veröffentlichungsnummer: WO9841909

(56) Entgegenhaltungen:
- EP-A- 0 575 148
- EP-B- 0 531 435
- DE-A- 19 510 466
- US-A- 5 551 053
- PINTO J J: ""CHICKEN-BRAIN" I/O ARCHITECTURE FOR "TRULY" DISTRIBUTED CONTROL" 1.Januar 1993 , ADVANCES IN INSTRUMENTATION AND CONTROL, VOL. 48, NR. PART 02, PAGE(S) 829 - 841 XP000435389 siehe Seite 832 - Seite 834; Abbildungen 1,3
- RUESS R: "SERCOS-INTERFACE AUCH FUER SENSOREN UND AKTOREN" 29.September 1992 , ELEKTRONIK, VOL. 41, NR. 20, PAGE(S) 66 - 68, 73 XP000311737 siehe Abbildungen 2,4

## Beschreibung

In der Automatisierungstechnik dienen elektronische Steuerungssysteme insbesondere zur Automatisierung von technischen Prozessen. Bekannt sind dabei elektronische Steuerungssysteme mit einer zentralen Verarbeitungseinheit, insbesondere einer speicherprogrammierbaren Steuerung welche gegebenenfalls eine sogenannte dezentrale Peripherie aufweisen zur Verteilung, Übertragung, Empfang und/oder Verarbeitung elektrischer Steuersignale. An das elektronische Steuerungssystem sind dabei beispielsweise über sogenannte Reihenklemmen technische Betriebsmittel angeschlossen. Derartige technische Betriebsmittel können beispielsweise Motoren, Ventile, Sensoren oder Schalter sein.

Aus dem Dokument DE 44 38 806 C1 ist eine modulare Steuerungsanlage bekannt, bei der auf Tragschienen anreihare Anschlußblöcke zur Signalverarbeitung zwischen Feldgeräten und einem internen Busleiter herstellen. Der interne Busleiter ist dabei an ein übergeordnetes Feldbussystem ankoppelbar. Die modulare Steuerungsanlage weist feststehende Reihenklemmen auf, auf welche ein Elektronikmodul aufsteckbar ist. Das abnehmbare Elektronikmodul dient insbesondere zu Zwecken der Signalverarbeitung und zur Ankopplung an ein mit einer zentralen speicherprogrammierbaren Steuerung verbundenes Bussystem.

Nachteilhaft ist es insbesondere, daß eine starre Anordnung der Steuersignal-Belegung der Klemmenanschlüsse der Reihenklemme vorliegt. Ein einmal festgelegte Klemmenstruktur ist nicht mehr ohne hohen Aufwand abänderbar.

Desweiteren nachteilhaft ist es, daß bei der bekannten Reihenklemme nur monodirektionale Klemmenein- bzw. -ausgänge vorliegen. Diese sind in der Regel als separater Klemmblock für Eingangssignale bzw. als separater Klemmblock für Ausgangssignale ausgebildet. Dadurch ist ein hoher, zeitaufwendiger Projektierungsaufwand notwendig, da jedes Steuersignalkabel eines technischen Betriebsmittels räumlich bei der Projektierung in Ein- und Ausgänge gesplittet werden muß.

Derartige bekannte Reihenklemmen erfordern somit nachteilhaft die Ausarbeitung komplizierter Klemmenbelegungspläne, die ein hohes Fehlerpotential bei der Projektierung, d.h. beim Anschluß der technischen Betriebsmittel an die Klemmenanschlüsse aufweisen.

Aufgabe der Erfindung ist es, eine Vorrichtung mit vorteilhafteren Projektierungseigenschaften anzugeben.

Die Aufgabe wird gelöst mit der im Anspruch 1 angegebenen programmierbaren Vorrichtung zur Verteilung von elektrischen Steuersignalen an technische Betriebsmittel.

Vorteil der erfindungsgemäßen programmierbaren Vorrichtung zur Verteilung von elektrischen Steuersignalen an technische Betriebsmittel ist es, daß auf einer graphischen Bedienoberfläche über graphische Bedienmittel eine anwendungsabhängig graphische Zuordnung von Klemmenanschlüssen und Prozeßsignalkanälen für elektrische Steuersignale erfolgt. Dabei wird durch die graphische Zuordnung eine steuerungstechnische Verknüpfung von Klemmenanschlüssen und Prozeßsignalkanälen bewirkt.

Desweiteren vorteilhaft ist es, daß bei der Projektierung von dem elektrischen Anschluß der technischen Betriebsmittel an den Klemmenanschlüssen in Richtung der Programmierung der Klemmenbelegung vorgegangen werden kann. Dabei sind auf der Bedienoberfläche insbesondere Ein- und Ausgangssignalkanäle einer zentralen Verarbeitungseinheit schnell und übersichtlich über die graphischen Bedienmittel anwendungsabhängig den entsprechenden Klemmenanschlüssen zuordenbar. Dies ermöglicht insbesondere eine bei der Projektierung übliche Verdrahtung nach Farben bzw. Nummerncode, d.h. insbesondere das sogenannte Auflegen der Signalleitungen nach dem sogenannten "Farbspiel" bzw. "Nummernspiel". Beispielsweise durch eine Farbzuordnung zwischen Signalleitungen und Klemmen ist mit minimalem Zeitaufwand eine sogenannte "stehende Verdrahtung" aufbaubar, ohne daß durch zusätzliche, redundante Sichtprüfungen die Richtigkeit einer erfolgten Verdrahtung erfolgen muß.

Weitere vorteilhafte Ausführungsformen der Erfindung sind in den entsprechenden Unteransprüchen angegeben.

Die Erfindung wird desweiteren anhand der in den nachfolgend kurz angeführten Figuren dargestellten Ausführungsbeispiele weiter erläutert. Dabei zeigt:
- FIG 1: beispielhaft einen allgemeinen Aufbau der programmierbaren Vorrichtung gemäß der Erfindung zur Verteilung von elektrischen Steuersignalen an technische Betriebsmittel,
- FIG 2: beispielhaft eine erste Ansicht der auf der Anzeigevorrichtung angezeigten graphischen Bedienoberfläche, und
- FIG 3: beispielhaft eine weitere Ansicht der graphischen Bedienoberfläche mit ersten und zweiten graphischen Bedienfeldern zur Visualisierung der programmierbaren Prozeßsignalkanäle und der Klemmenanschlüsse.

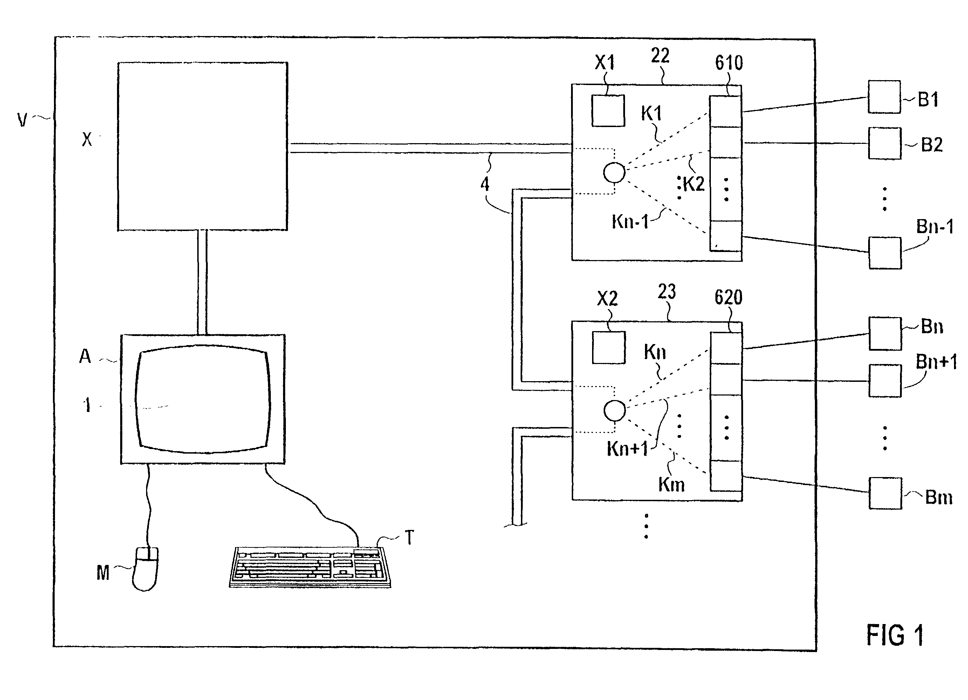

In der Figur 1 ist beispielhaft ein allgemeiner Aufbau der programmierbaren Vorrichtung V gemäß der Erfindung zur Verteilung von elektrischen Steuersignalen an technische Betriebsmittel dargestellt. Die technischen Betriebsmittel sind dabei mit den Bezugszeichen B1, B2,..,Bn-1, Bn, Bn+1,..,Bm bezeichnet. Die programmierbare Vorrichtung V weist Klemmenanschlüsse 610 und 620 zum elektrischen Anschluß der technischen Betriebsmittel B1..Bm auf. Desweiteren weist die programmierbare Vorrichtung V anwendungsabhängig programmierbare Prozeßsignalkanäle, welche in der Figur 1 mit den Bezugszeichen K1, K2,..,Kn-1, Kn, Kn+1,...,Km dargestellt sind, für die elektrischen Steuersignale auf. Eine Anzeigevorrichtung A der programmierbaren Vorrichtung V, beispielsweise ein Computermonitor, dient zur Darstellung einer graphischen Bedienoberfläche 1. Die graphische Bedienoberfläche 1 dient insbesondere zur Visualisierung der programmierbaren Prozeßsignalkanäle K1..Km und der Klemmenanschlüsse 610 und 620 und ist insbesondere über graphische Bedienmittel M und/oder T bedienbar. Diese liegen beispielsweise in Form einer sogenannten Computermaus, einer Computertastatur und/oder einem in der elektrischen Datenverarbeitung bekannten manuellen Eingabegerät vor. Durch eine auf der Bedienoberfläche 1 erfolgende graphische Zuordnung der visualisierten programmierbaren Prozeßsignalkanäle K1..Km zu den visualisierten Klemmenanschlüssen 610 und/oder 620, erfolgt über wenigstens eine Verarbeitungseinheit X1 und/oder X2 eine entsprechende steuerungstechnische Verknüpfung.

In einer Ausführungsform der programmierbaren Vorrichtung gemäß der Erfindung ist wenigstens eine Verarbeitungseinheit X1 bzw. X2 als ein dezentrales Anschlußmodul 22 bzw. 23 ausgebildet. Dieses weist dabei die Klemmenanschlüsse 610 bzw. 620 zum Anschluß technischer Betriebsmittel B1..Bm auf und ist über einen Datenbus 4 mit einer zentralen Verarbeitungseinheit X verbunden. Über den Datenbus 4 sind somit elektrische Steuersignale über die entsprechenden Prozeßsignalkanäle K1..Km und die Klemmenanschlüsse 610, 620 sowohl von der zentralen Verarbeitungseinheit X zu den technischen Betriebsmitteln B1..Bm hin- als auch zurückführbar. Dadurch ist beispielsweise eine sogenannte 'dezentrale Peripherie' mit zentraler Verarbeitungseinheit X realisierbar, wobei die dezentralen Anschlußmodule 22 und 23 jeweils separat und insbesondere in unmittelbarer Umgebung der entsprechenden Betriebsmittel B1..Bm anordenbar sind. Die zentrale Verarbeitungseinheit X liegt beispielsweise in Form einer speicherprogrammierbaren Steuerung vor, welche zur Bearbeitung der elektrischen Steuersignale dient. Der Datenbus 4 liegt vorteilhaft in Form eines Standard-Bussystems, wie beispielsweise als PROFI-Bussystem oder als CAN-Bussystem vor.

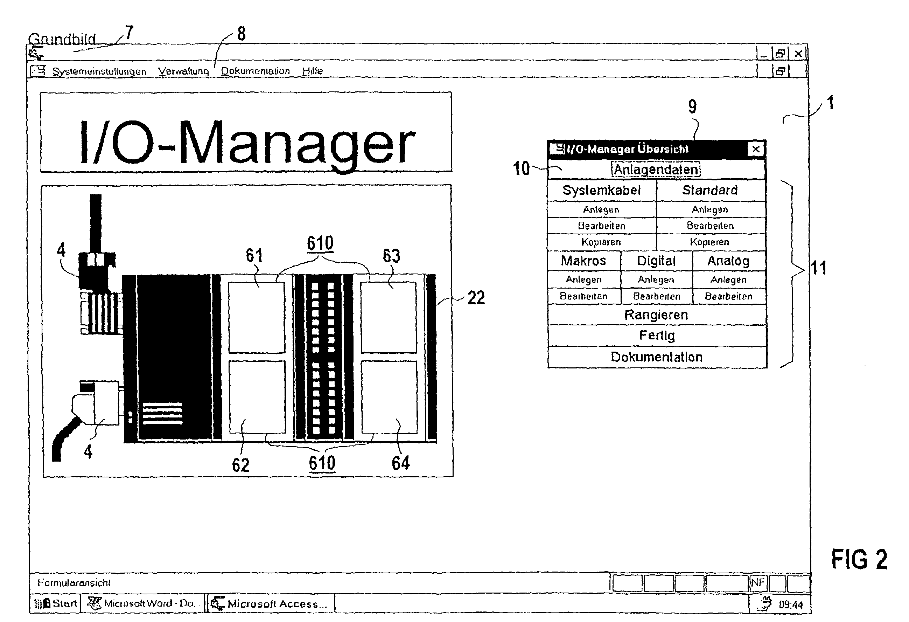

In der Figur 2 ist beispielhaft eine erste Ansicht der auf der Anzeigevorrichtung A angezeigten graphischen Bedienoberfläche 1 dargestellt. Diese weist in der Ansicht der Figur 2 eine Programm- und Datenanzeigeleiste 7, sowie eine Menüleiste 8 zur Steuerung der Bedienoberfläche 1 auf. Desweiteren enthält die Bedienoberfläche 1 zur Steuerung ein Steuerfenster 9, mit beispielhaft aktivierter Schaltfläche 10 'Anlagedaten', sowie weiteren Schaltflächen 11 auf, die zur 'virtuellen' Projektierung der programmierbaren Vorrichtung gemäß der Erfindung dienen.

Desweiteren enthält die in der Figur 2 dargestellte Bedienoberfläche 1 beispielhaft die Visualisierung eines dezentralen Anschlußmoduls 22, welches an den Datenbus 4 angeschlossen ist und die Klemmenanschlüsse 610 beispielhaft in Form von vier Klemmenfeldern 61, 62, 63 und 64 aufweist. Diese können jeweils eine Vielzahl von einzelnen Klemmenanschlüssen, beispielsweise jeweils acht Stück, zum Anschluß technischer Betriebsmittel B1..Bm aufweisen.

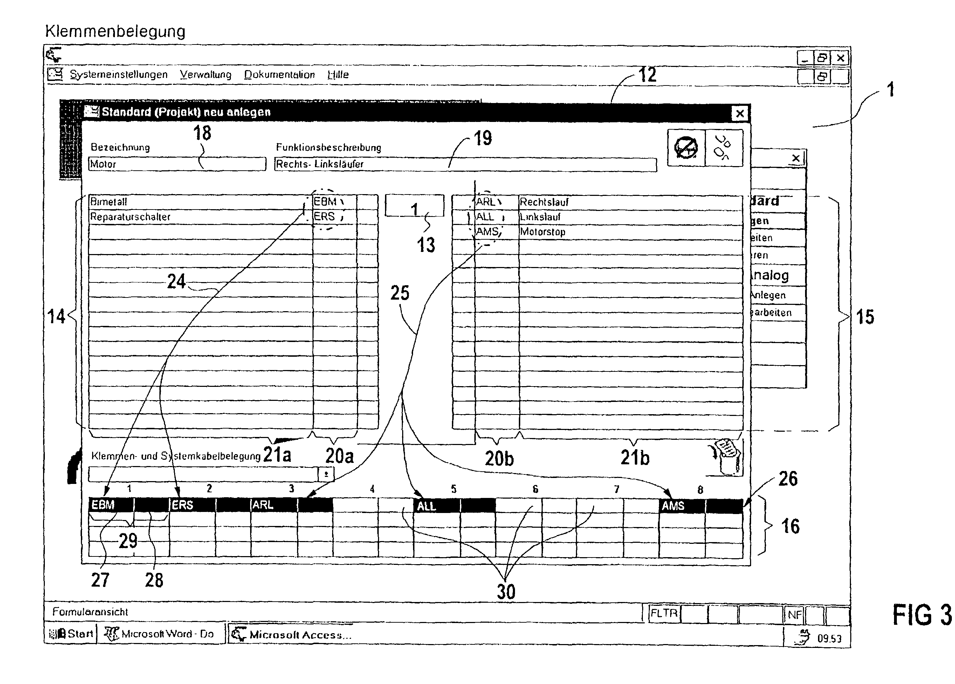

In der Figur 3 ist desweiteren eine weitere, beispielhafte Ansicht der graphischen Bedienoberfläche 1 dargestellt. Gemäß der Erfindung weist diese erste graphische Bedienfelder 14 und 15 zur Visualisierung der in der Figur 1 dargestellten programmierbaren Prozeßsignalkanäle K1..Km, sowie zweite graphische Bedienfelder 16 zur Visualisierung der in der Figur 1 dargestellten Klemmenanschlüsse 610 und 620 auf. Vorteilhaft ist dabei jedem der programmierbaren Prozeßsignalkanäle K1..Km, sowie jedem der Klemmenanschlüsse 610 und 620 jeweils wenigstens ein erstes 14, 15 bzw. jeweils wenigstens ein zweites graphisches Bedienfeld 16 zugeordnet. Mittels der in der Figur 1 dargestellten graphischen Bedienmittel M und/oder T ist anwendungsabhängig eine graphische Zuordnung eines ersten graphischen Bedienfelds 14, 15 zu einem zweiten graphischen Bedienfeld 16 bewirkbar. Die Verarbeitungseinheit X1 und/oder X2 bewirkt entsprechend der graphischen Zuordnung eine derartige steuerungstechnische Verknüpfung, daß die elektrischen Steuersignale übertragbar sind über den Prozeßsignalkanal K1..Km, welcher durch das erste graphische Bedienfeld 14 und/oder 15 repräsentiert wird und den Klemmenanschluß 610 und/oder 620, welcher durch das zweite graphische Bedienfeld 16 repräsentiert wird.

In einer in der Figur 3 dargestellten Ausführungsform der Erfindung ist auf der graphischen Bedienoberfläche 1 jedem technischen Betriebsmittel B1..Bm ein separates Prozeßfenster 12 zugeordnet, welches zumindest die ersten und zweiten graphischen Bedienfelder 14, 15 und 16 aufweist. Insbesondere kann ein graphische Feld, welches das Bezugszeichen 13 aufweist, eine laufende Nummer enthalten, hier beispielsweise die Nummer '1'. Unter dieser laufenden Nummer ist somit insbesondere die graphische Zuordnung eines bestimmtes Betriebsmitteltyps B1..Bm in einer elektronischen Bibliothek speicherbar. Somit können vorteilhaft die graphischen Zuordnungen unterschiedlicher Betriebsmitteltypen B1..Bm einmalig erstellt und abgespeichert werden. Bei der Projektierung von Betriebsmitteln B1..Bm kann dann bei der anwendungsabhängigen Programmierung der erfindungsgemäßen Vorrichtung auf abgespeicherte graphische Zuordnungen der benötigten Betriebsmittel B1..Bm zurückgegriffen werden. Im Beispiel der Figur 3 enthält das separate Prozeßfenster 12 ein graphische Eingabefeld 18 für die Bezeichnung des entsprechenden Betriebsmittels, hier beispielsweise 'Motor', sowie ein weiteres graphisches Eingabefeld 19 mit einer Funktionsbeschreibung des Betriebsmittels, hier beispielsweise 'Rechts- Linksläufer'.

Vorteilhaft, wie in der Figur 3 dargestellt ist, weist die graphische Bedienoberfläche 1 in einer weiteren Ausführungsform der Erfindung einen graphischen Eingangsbereich 14 auf, in dem diejenigen ersten graphischen Bedienfelder 20a und 21a angeordnet sind, welche bei graphischer Zuordnung 24 zu den zweiten graphischen Bedienfeldern 16 als Eingangssignalkanäle mit den entsprechenden Klemmenanschlüssen 610 bzw. 620 verknüpft werden. Desweiteren weist die graphische Bedienoberfläche 1 vorteilhaft einen graphischen Ausgangsbereich 15 auf, in dem diejenigen ersten graphischen Bedienfelder 20b und 21b angeordnet sind, welche bei graphischer Zuordnung 25 zu den zweiten graphischen Bedienfeldern 16 als Ausgangssignalkanäle mit den entsprechenden Klemmenanschlüssen 610 bzw. 620 verknüpft werden.

In der Darstellung der Figur 3 sind dabei beispielhaft eine Vielzahl die Bezugszeichen 14, 15, und 16 aufweisender erster und zweiter graphischer Bedienfelder in tabellarischer Anordnung, d.h. zeilen- und spaltenförmig aneinandergereiht dargestellt. Dabei visualisiert jede Zeile des mit dem Bezugszeichen 14 bzw. 15 bezeichneten Eingangs- bzw. Ausgangsbereiches einen programmierten Prozeßsignal K1..Km. Jedem Prozeßsignalkanal K1..Km sind beispielhaft jeweils zwei der ersten graphischen Bedienfelder zugeordnet. In den Feldern der Spalten 20a bzw. 20b sind dabei jeweils beispielhaft eine Langtextbeschreibung und in den Feldern der Spalten 21a bzw. 21b sind dabei jeweils beispielhaft eine Kurztextbeschreibung eintragbar.

Vorteilhaft weist die graphische Bedienoberfläche 1 einen graphischen Klemmenbereich 16 auf, in dem die zweiten graphischen Bedienfelder 16 mit einer derartigen Plazierung angeordnet sind, daß diese annähernd der Anordnung der Klemmenanschlüsse 610 bzw. 620 entspricht. Dabei ist im Beispiel der Figur 3 der graphischen Klemmenbereich für die zweiten graphischen Bedienfelder 16 in vier Zeilen zu acht Spalten aufgeteilt, wobei die vier Zeilen annähernd der in-der Figur 2 dargestellten Anordnung der Klemmenfelder 61, 62, 63 und 64 entsprechen.

Im Beispiel der Figur 3 erfolgt eine graphische Zuordnung 24 und 25 von Eingangs- und Ausgangssignalkanäle repräsentierenden ersten graphischen Bedienfeldern 14 und 15 zu den zweiten graphischen Bedienfeldern 16, welche in der Zeile mit Bezugszeichen 26 und den Spalten eins bis acht angeordnet sind. Die graphische Zuordnung 24 und 25 kann vorteilhaft mittels einer Computermaus M durch ein sogenanntes 'Drag & Drop' erfolgen. Inbesondere ist für ein technisches Betriebsmittel B1..Bm eine ganze Zeile belegbar, so daß beispielsweise ein gesamtes Klemmenfeld 61, 62, 63 bzw. 64 belegt ist. Dabei sind insbesondere mittels der graphischen Bedienmittel zweite graphische Bedienfelder 16 auch so graphisch belegbar, wie mit dem Bezugszeichen 30 dargestellt ist, daß zwar keine Zuordnung von ersten graphischen Bedienfeldern 14 bzw. 15 erfolgt, aber durch die Verarbeitungseinheit X1 bzw. X2 eine steuerungstechnische Sperrung der repräsentierten Klemmenanschlüsse bewirkt wird.

In einer weiteren Ausführungsform der Erfindung ist auf der graphischen Bedienoberfläche 1 den durch die zweiten graphischen Bedienfelder 16 repräsentierten Klemmenanschlüssen 610 und 620 jeweils ein Farb- und/oder Nummerncode 28 zuordenbar. Im Beispiel der Figur 3 sind jedem der Klemmenanschlüsse 610 bzw. 620 jeweils zwei zweite graphische Bedienfelder zugeordnet. Beispielsweise weist das zur Visualisierung eines einzigen Klemmenanschlusses dienende Doppelfeld 29 ein erstes Feld 27 mit der Kurztextbeschreibung des graphisch zugeordneten ersten graphischen Bedienfelds und ein zweites Feld 28 mit einem Farb- und/oder Nummerncode 28 auf. Der Farb- und/oder Nummerncode 28 dient insbesondere bei einer Projektierung mit dem Auflegen der Signalleitungen nach dem sogenannten "Farbspiel" bzw. "Nummernspiel".

## Patentansprüche

1. Programmierbare Vorrichtung (V; Fig. 1) zur Verteilung von elektrischen Steuersignalen an technische Betriebsmittel (B1..Bm), welche aufweist
a) Klemmenanschlüsse (610, 620, 61, 62, 63, 64; Fig. 1, 2) zum elektrischen Anschluß der technischen Betriebsmittel (B1..Bm),
b) anwendungsabhängig programmierbare Prozeßsignalkanäle (K1..Km; Fig. 1) für die elektrischen Steuersignale,
c) eine Anzeigevorrichtung (A) mit einer graphischen Bedienoberfläche (1; Fig. 1, 2, 3), welche aufweist
c1) erste graphische Bedienfelder (14, 15; Fig. 3) zur Visualisierung der programmierbaren Prozeßsignalkanäle (K1..Km; Fig. 1)
c2) zweite graphische Bedienfelder (16, 26, 29; Fig. 3) zur Visualisierung der Klemmenanschlüsse (610, 620, 61, 62, 63, 64; Fig. 2), und
d) graphische Bedienmittel (M, T; Fig.1) zur anwendungsabhängigen graphischen Zuordnung eines ersten graphischen Bedienfelds (14, 15) zu einem zweiten graphischen Bedienfeld (16, 26, 29), und
e) wenigstens eine Verarbeitungseinheit (X1, X2), welche entsprechend der graphischen Zuordnung eine derartige steuerungstechnische Verknüpfung bewirkt, daß die elektrischen Steuersignale übertragbar sind über den Prozeßsignalkanal (K1..Km), welcher durch das erste graphische Bedienfeld (14, 15) repräsentiert wird und den Klemmenanschluß (610, 620, 61, 62, 63, 64), welcher durch das zweite graphische Bedienfeld (16, 26, 29) repräsentiert wird.

2. Vorrichtung nach Anspruch 1, wobei auf der graphischen Bedienoberfläche (1; Fig. 1, 2, 3) jedem technischen Betriebsmittel (B1..Bm) ein separates Prozeßfenster (12, 13; Fig. 3) zugeordnet ist, welches zumindest aufweist die ersten und zweiten graphischen Bedienfelder (14, 15, 16, 26, 29), welche zur Visualisierung der mit dem technischen Betriebsmittel (B1..Bm) verknüpften Prozeßsignalkanäle (K1..Km) und Klemmenanschlüsse (610, 620, 61, 62, 63, 64) dienen.

3. Vorrichtung nach einem der vorangegangenen Ansprüche, wobei die graphische Bedienoberfläche (1; Fig. 3) aufweist
a) einen graphischen Eingangsbereich (14; Fig. 3), in dem diejenigen ersten graphischen Bedienfelder (20a, 21a) angeordnet sind, welche bei graphischer Zuordnung (24) zu den zweiten graphischen Bedienfeldern (16, 26, 29) als Eingangssignalkanäle mit den entsprechenden Klemmenanschlüssen (610, 620) verknüpft werden, und
b) einen graphischen Ausgangsbereich (15; Fig. 3), in dem diejenigen ersten graphischen Bedienfelder (20b, 21b) angeordnet sind, welche bei graphischer Zuordnung (25) zu den zweiten graphischen Bedienfeldern (16, 26, 29) als Ausgangssignalkanäle mit den entsprechenden Klemmenanschlüssen (610, 620) verknüpft werden.

4. Vorrichtung nach einem der vorangegangenen Ansprüche, mit einem graphischen Klemmenbereich (16), in dem die zweiten graphischen Bedienfelder (16, 26, 29) mit einer derartigen Plazierung angeordnet sind, daß diese annähernd der Anordnung der Klemmenanschlüsse (610, 620, 61, 62, 63, 64) entspricht.

5. Vorrichtung nach einem der vorangegangenen Ansprüche, wobei auf der graphischen Bedienoberfläche (1; Fig. 3) den durch die zweiten graphischen Bedienfelder (16, 26, 29) repräsentierten Klemmenanschlüssen (610, 620) jeweils ein Farb- und/oder Nummerncode (28) zuordenbar ist.

6. Vorrichtung nach einem der vorangegangenen Ansprüche, wobei eine Verarbeitungseinheit (X1, X2) als ein dezentrales Anschlußmodul (22, 23) ausgebildet ist, welches
a) Klemmenanschlüsse (610, 620) zum Anschluß technischer Betriebsmittel (B1..Bm) aufweist, und welches
b) über einen Datenbus (4) mit einer zentralen Verarbeitungseinheit (X) verbunden ist, insbesondere einer speicherprogrammierbaren Steuerung welche zur Bearbeitung der elektrischen Steuersignale dient.

## Claims

1. A programmable device (V; Fig. 1) for distributing electrical control signals to technical equipment (B1..Bm), comprising:
a) terminal connections (610, 620, 61, 62, 63, 64; Fig. 1, 2) for electrically connecting the technical equipment (B1..Bm);
b) application-dependent programmable process signal channels (K1..Km, Fig. 1) for the electrical control signals;
c) a display device (A) having a graphics user interface (1; Fig. 1, 2, 3), comprising:
c1) first graphics control fields (14, 15; Fig. 3) for displaying the programmable process signal channels (K1..Km; Fig. 1);
c2) second graphics control fields (16, 26, 29; Fig. 3) for displaying the terminal connections (610, 620, 61, 62, 63, 64; Fig. 2); and
d) graphics control equipment (M, T; Fig. 1) for establishing an application-dependent graphical association between a first graphics control field (14, 15) and a second graphics control field (16, 26, 29); and
e) at least one processing unit (X1, X2) which, on the basis of the graphical association, produces a control link such that the electrical control signals can be transmitted via the process signal channel (K1..Km) that is represented by the first graphics control field (14, 15), and the terminal connection (610, 620, 62, 63, 64) that is represented by the second graphics control field (16, 26, 29).

2. Device in accordance with Claim 1, whereby on the graphics user interface (1; Fig. 1, 2, 3) a separate process window (12, 13; Fig. 3) is associated with each piece of technical equipment (B1..Bm), said separate process window having at least the first and second graphics control fields (14, 15, 16, 26, 29) that are used to show the process signal channels (K1..Km) and terminal connections (610, 620, 61, 62, 63, 64) that are linked to the piece of technical equipment (B1..Bm).

3. Device in accordance with one of the preceding claims, whereby the graphics user interface (1; Fig. 3) comprises:
a) a graphics input area (14; Fig. 3) containing those first graphics control fields (20a, 21a) that are linked during a graphical association (24) with the second graphics control fields (16, 26, 29) to the corresponding terminai connections (610, 620) as input signal channels; and
b) a graphics output area (15; Fig. 3) containing those first graphics control fields (20b, 21b) that are linked during a graphical association (25) with the second graphics control fields (16, 26, 29) to the corresponding terminal connections (610, 620) as output signal channels.

4. Device in accordance with one of the preceding claims, with a graphics terminal area (16) containing the second graphics control fields (16, 26, 29) positioned to correspond approximately to the arrangement of the terminal connections (610, 620, 61, 62, 63, 64).

5. Device in accordance with one of the preceding claims, whereby on the graphics user interface (1; Fig. 3) a colour code and/or number code (28) is associated in each case with the terminal connections (610, 620) which are represented by the second graphics control fields (16, 26, 29).

6. Device in accordance with one of the preceding claims, whereby a processing unit (X1, X2) is formed as a local connection module (22, 23), comprising:
a) terminal connections (610, 620) for the connection of technical equipment (B1..Bm), and which
b) is connected via a data bus (4) to a central processing unit (X), in particular a programmable logic controller that is used to process the electrical control signals.

## Revendications

1. Dispositif (V ; figure 1) programmable pour distribuer des signaux de commande électriques à des moyens (B1...Bm) techniques d'exploitation, qui comporte
a) des raccordements (610, 620, 61, 62, 63, 64 ; figures 1, 2) de bornes pour le raccordement électrique des moyens (B1...Bm) techniques d'exploitation,
b) des voies (K1...Km; figure 1) de signaux d'opération, programmables en fonction de l'application, pour les signaux de commande électriques,
c) un dispositif (1) d'affichage, comportant une interface (1; figures 1, 2, 3) homme-machine graphique qui comporte
c1) des premiers champs (14, 15 ; figure 3) de commande graphiques pour la visualisation des voies (K1...Km; figure 1) de signaux d'opération programmables
c2) des deuxièmes champs (16, 26, 29 ; figure 3) de commande graphiques pour la visualisation des raccordements (610, 620, 61, 62, 63, 64 ; figure 2) de bornes, et
d) des moyens (M, T ; figure 1) de commande graphiques pour l'association graphique, en fonction de l'application, d'un premier champ (14, 15) de commande graphique à un deuxième (16, 26, 29) champ de commande graphique, et
e) au moins une unité (X1, X2) de traitement, qui provoque en fonction de l'association graphique une combinaison de la technique de commande telle que les signaux de commande électrique peuvent être transmis par l'intermédiaire de la voie (K1...Km) de signaux d'opération qui est représentée par le premier champ (14, 15) de commande graphique et par l'intermédiaire du raccordement (610, 620, 61, 62, 63, 64) de bornes qui est représenté par le deuxième champ (16, 26, 29) de commande graphique.

2. Dispositif suivant la revendication 1, une fenêtre (12, 13 ; figure 3) d'opération séparée, qui comporte au moins les premier et deuxième champs (14, 15, 16, 26, 29) de commande graphique qui servent à la visualisation des voies (K1...Km) de signaux d'opération et des raccordements (610, 620, 61, 62, 63, 64) de borne combinées aux moyens (B1...Bm) techniques d'exploitation, étant associée sur l'interface (1 ; figure 1, 2, 3) homme-machine graphique à chaque moyen (B1...Bm) technique d'exploitation.

3. Dispositif suivant l'une des revendications précédentes, l'interface (1 ; figure 3) homme-machine graphique comportant
a) une zone (14 ; figure 3) d'entrée graphique, dans laquelle sont disposés les premiers champs (20a, 21a) de commande graphiques qui sont, lors de l'association (24) graphique au deuxième champ (16, 26, 29) de commande graphique, combinés comme voie de signaux d'entrée aux raccordements (610, 620) de bornes correspondants, et
b) une zone (15 ; figure 3) de sortie graphique, dans laquelle sont disposés les premiers champs (20b, 21b) de commande graphiques qui sont, lors de l'association (25) graphique aux deuxièmes champs (16, 26, 29) de commande graphique, combinés comme voie de signaux de sortie aux raccordements (610, 620) de borne correspondants.

4. Dispositif suivant l'une des revendications précédentes, comportant une région (16) de borne graphique, dans laquelle les deuxièmes champs (16, 26, 29) de commande graphiques sont disposés en ayant un emplacement tel que cet emplacement correspond à peu près à la disposition des raccordements (610, 620, 61, 62, 63, 64) de borne.

5. Dispositif suivant l'une des revendications précédentes, un code (28) de couleur et/ou chiffré pouvant être associé sur l'interface (1 ; figure 3) homme-machine graphique aux raccordements (610, 620) de borne représentés par les deuxièmes champs (16, 26, 29) de commande graphiques.

6. Dispositif suivant l'une des revendications précédentes, une unité (X1, X2) de traitement étant réalisée en module (22, 23) de raccordement décentralisé qui
a) comporte des raccordements (610, 620) de borne pour le raccordement de moyens (B1...Bm) techniques d'exploitation, et qui
b) est relié par l'intermédiaire d'un bus (4) de données à une unité (X) centrale de traitement, notamment à une commande à mémoire programmable qui sert au traitement des signaux de commande électriques.
